# EUROPÄISCHE PATENTANMELDUNG

(11) **EP 2 421 108 A2**
(43) Veröffentlichungstag der Anmeldung: **22.02.2012**
(21) Anmeldenummer: 11006424.3
(22) Anmeldetag: 04.08.2011
(51) Int. Cl.: H02G 3/16

(54) **Anschlussdose mit Prüfkontakt**

(30) Priorität: 17.08.2010 DE 102010034633
(71) Anmelder: Lumberg Connect GmbH, 58579 Schalksmühle (DE)
(72) Erfinder: Richter, Michael, 58579 Schalksmühle (DE); Gazke, Dennis, 58507 Lüdenscheid (DE)
(74) Vertreter: Ostriga, Sonnet, Wirths & Roche

(57) **Zusammenfassung**

Beschrieben und dargestellt ist eine Anschlussdose, insbesondere für ein Solarmodul, mit einer zur modulseitigen Montagefläche parallelen Basis und mit einem von einem Deckel verschlossenen und von einem Gehäuse gebildeten Innenraum, innerhalb dessen ein solarmodulseitige Leiter mit einer Anschlussleitung zum Abführen erzeugter Elektrizität verbunden ist, wobei die den Innenraum verlassende Leitung mit einem Steckverbinder versehen ist, welcher in einer anschlussdosenseitigen Halteeinrichtung angeordnet ist, wobei ein im Wesentlichen vertikal zur Basis zugänglicher Prüfkontakt vorgesehen ist, der mit einem Anschlusskontakt des Steckverbinders der Anschlussleitung elektrisch verbunden ist und mittels dessen durch Einspeisen elektrischer Spannung die Funktion der Anschlussdose prüfbar ist.

## Beschreibung

Die Erfindung betrifft eine Anschlussdose, insbesondere für ein Solarmodul, mit einer zur modulseitigen Montagefläche parallelen Basis und mit einem von einem Deckel verschlossenen und von einem Gehäuse gebildeten Innenraum, innerhalb dessen ein solarmodulseitiger Leiter mit einer Anschlussleitungen zum Abführen erzeugter Elektrizität verbunden ist, wobei die den Innenraum verlassende Leitung mit einem Steckverbinder versehen ist, welcher in einer anschlussdosenseitigen Halteeinrichtung angeordnet ist.

Gattungsgemäße Anschlussdosen sind beispielsweise aus DE 10 2007 023 210 B3, DE 10 2007 027 861 A1 und DE 10 2007 060 023 A1 bekannt.

Das Erfordernis, die Steckverbinder der Anschlussleitungen über eine Halteeinrichtung am Gehäuse zu halten, hat sich im Wesentlichen aus den Anforderungen einer automatisierten Solarmodulherstellung ergeben. Für die vollautomatisierte Herstellung von Solarmodulen müssen die auf den Solarmodulen zu montierenden Anschlussdosen maschinengerecht in Vorratsstapeln anlieferbar sein. Insofern wird die Anschlussdose in der Regel beim Anschlussdosenhersteller vormontiert und mit Anschlussleitungen versehen. Um einen geordneten Stapel anliefern zu können, sind die Anschlussleitungen über die Steckverbinder an der Dose direkt gesichert.

Die definierte Anordnung der Steckverbinder an der Anschlussdose wird im Stand der Technik gemäß DE 10 2007 060 023 A1 zusätzlich dazu genutzt, eine Funktionsprüfung der Anschlussdose durchzuführen. Hierbei fährt eine Prüfeinrichtung die Kontakte der Steckverbinder an und speist Elektrizität ein. Hierüber lässt sich mittels verschiedener Messverfahren feststellen, ob die Verbindungen zwischen den Steckverbindern, Anschlussleitungen und den innerhalb der Anschlussdosen angeordneten Funktionsbauteilen, wie beispielsweise Bypassdioden, ordnungsgemäß ausgeführt ist.

Es hat sich jedoch herausgestellt, dass die Lage der Steckverbinder und insbesondere ihrer Anschlusskontakte in Abhängigkeit von den Halteeinrichtungen an der Anschlussdose, der Länge der Anschlusskabel und der daraus resultierenden Gewichtsbelastung der Halteeinrichtungen und weiterer Einflüsse einer gewissen Streuung unterliegt. Dies hat eine aufwändige Steuerungslogik für den Prüfroboter zur Folge, welcher zur Funktionsprüfung der Anschlussdose die Anschlusskontakte der Steckverbinder anfährt.

Es ist deshalb Aufgabe der Erfindung, eine Anschlussdose für die vollautomatisierte Produktion zu schaffen, die eine definierte Lage der von einer Prüfeinrichtung zu nutzenden Kontakte und eine Vereinfachung der Prüfroutine gewährleistet.

Gelöst wird die Aufgabe von einer Anschlussdose mit den Merkmalen des Anspruchs 1, insbesondere mit den kennzeichnenden Merkmalen, wonach ein im Wesentlichen vertikal zur Basis zugänglicher Prüfkontakt vorgesehen ist, der mit einem Anschlusskontakt des Steckverbinders der Anschlussleitung elektrisch verbunden ist und mittels dessen durch Einspeisen elektrischer Spannung die Funktion der Anschlussdose prüfbar ist.

In Abkehr von der aus dem Stand der Technik bekannten Prüfroutine über das zur Basis parallele, also horizontale Anfahren der Anschlusskontakte der in einer Halteeinrichtung an der Anschlussdose angeordneten Steckverbinder, schafft die Erfindung einen Prüfkontakt, der vertikal zur Basis, also vertikal zur Montagefläche des Solarmoduls angefahren wird. Dies hat hinsichtlich der Prüfroutine erhebliche Vorteile. Auf diese Weise kann das Montieren der Anschlussdose und die Funktionsprüfung durch Kontaktierung der Anschlussleitungen und solarmodulseitigen Leiter in einem Arbeitsgang und vor allen Dingen mittels nur einer Bewegung erfolgen.

War es im Stand der Technik notwendig, über eine vertikal zur Montagefläche des Solarmoduls gerichtete Bewegung die Anschlussdose auf dem Solarmodul zu befestigen und über sich identisch bewegende Werkzeuge die Verbindung zwischen solarmodulseitigem Leiter und Anschlussleitung mechanisch oder durch Schweißen bzw. Löten herzustellen und parallel dazu oder in einem gesonderten Arbeitsschritt mit den Prüfwerkzeugen mittels einer Horizontalbewegung, also einer parallel zur Montagefläche des Solarmoduls gerichteten Bewegung, die Anschlusskontakte der Steckverbinder zur Prüfung anzufahren, lassen sich beide Vorgänge nunmehr vereinen. Der Werkzeugkopf, welcher die erfindungsgemäße Anschlussdose auf dem Solarmodul befestigt, verfügt zunächst über Montagewerkzeuge zur Verbindung von Anschlussleitung und solarmodulseitigem Leiter. Weiterhin verfügt er über die notwendigen Prüfstifte, welche die vertikal zugänglichen Prüfkontakte angreifen. So kann über die Prüfkontakte eine Funktionsprüfung der Anschlussdose parallel zur Montage vorgenommen werden.

Da Anschlussdosen normalerweise in ihrem Innenraum gegenüber der Anzahl der abgehenden Anschlussleitungen eine höhere Anzahl von Kontakten für solarmodulseitige Leiter aufweisen, die wiederum insbesondere über Bypassdioden miteinander verbunden sind, lässt sich schon bei der Montage der Anschlussdose eine sehr exakte Funktionsprüfung durchführen. Geht man davon aus, dass sowohl die Prüfkontakte und hierüber die Anschlussleitungen wie auch die innerhalb der Anschlussdose gelegenen Kontakte von einer Prüfeinrichtung angegriffen sind, lässt sich über entsprechende Schaltungen jedwede Möglichkeit des elektrischen Stromflusses beim Betrieb eines Solarmoduls simulieren.

Bei einer besonders bevorzugten Ausführungsform ist vorgesehen, dass der Anschlusskontakt des Steckverbinders und der Prüfkontakt separate Bauteile bilden, insbesondere dass der Prüfkontakt an dem Anschlussdosengehäuse angeordnet ist.

Durch die separate Ausbildung des Prüfkontaktes und dessen separate Anordnung am Anschlussdosengehäuse ist eine definierte Lage des Prüfkontaktes gewährleistet, die unabhängig von Maß- und Produktionstoleranzen der Halteeinrichtung und der Steckverbinder oder von Gewichtseinflüssen der am Steckverbinder angeordneten Kabel ist.

Es ist weiterhin vorgesehen, dass der Prüfkontakt aufgrund der Anordnung des Steckverbinders an der Halteeinrichtung mit dem Anschlusskontakt des Steckverbinders in elektrischem Kontakt steht. Hierdurch ist gewährleistet, dass durch Einsetzen des Steckverbinders in die Halteeinrichtung die Verbindung zwischen dem Anschlusskontakt des Steckverbinders und dem Prüfkontakt hergestellt wird und keine separaten Handgriffe notwendig sind.

Besonders bevorzugt ist eine Ausführungsform, bei welcher das Anschlussdosengehäuse eine zum Steckverbinder komplementäre und als Halteeinrichtung dienende Steckmimik ausbildet, an welcher der Steckverbinder angeordnet ist.

Im Gegensatz zu den aus dem Stand der Technik bekannten Haltekrallen und ähnlichen Halteeinrichtungen bietet das Nutzen der originären Steckverbindermimik zur Halterung des Steckverbinders an der Anschlussdose den wesentlichen Vorteil, dass ein sicherer und lagedefinierter Halt gewährleistet ist.

Es ist sodann daran gedacht, dass die komplementäre Steckmimik den Prüfkontakt trägt, der bei angeordnetem Steckverbinder mit dessen Anschlusskontakt in elektrischer Verbindung steht und über eine im Wesentlichen vertikal zur Basis gerichtete Öffnung zugänglich ist.

Die Erfindung bezieht sich insbesondere auf solche Anschlussdosen, bei weichen der Anschlusskontakt des Steckverbinders aufgrund von dessen Anordnung in der Haltevorrichtung im Wesentlichen lediglich horizontal zugänglich ist.

Für die korrekte Lageausrichtung der Anschlussdose hinsichtlich der Montage- und Prüfwerkzeuge ist vorgesehen, dass die Anschlussdose Zentriermimiken aufweist, mittels derer sie gegenüber einem Prüfwerkzeug zentrierbar ist.

Eine alternative Ausführung der Anschlussdose sieht vor, dass der Prüfkontakt vom Anschlusskontakt des Steckverbinders gebildet ist, der durch eine im Wesentlichen vertikal zur Basis gerichtete Öffnung im Steckverbinder zugänglich ist.

Dies stellt insbesondere eine Alternative zum separaten Prüfkontakt dar, der erfindungsgemäß an der Anschlussdose angeordnet ist. Es ist jedoch notwendig, vor der Einspeisung von Elektrizität zu gewährleisten, dass die Öffnung für den Prüfabgriff verschlossen wird. Dies lässt sich beispielsweise nach Prüfung durch das Werkzeug zur Montage der Anschlussdose gewährleisten.

Im Übrigen wird die Erfindung anhand der Darstellung des nachfolgenden Ausführungsbeispiels näher erläutert. Es zeigen:
- Fig. 1:: eine erfindungsgemäße Anschlussdose in perspektivischer Ansicht;
- Fig. 2:: die Anschlussdose gemäß Fig. 1 in Aufsicht;
- Fig. 3:: die Schnittdarstellung der Anschlussdose gemäß Fig. 2 entsprechend Schnittlinie III-III unter Anordnung des Steckverbinders an der Anschlussdose.

In den Figuren ist eine Anschlussdose für Solarmodule insgesamt mit der Bezugsziffer 10 versehen.

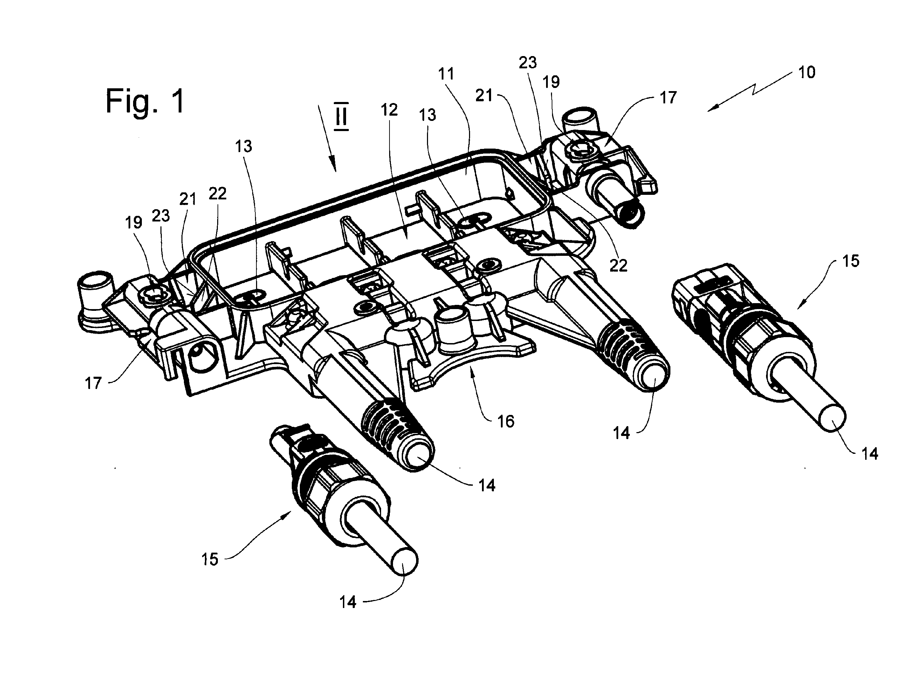

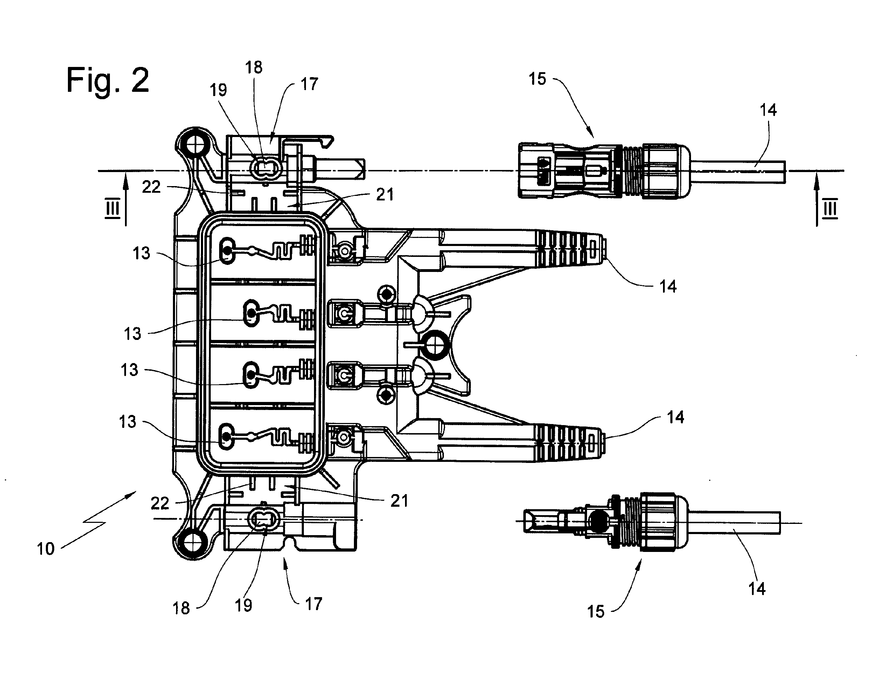

Aus der perspektivischen Ansicht in Fig. 1 und der Aufsicht in Fig. 2 der erfindungsgemäßen Anschlussdose 10 ist ersichtlich, dass diese zunächst über ein Gehäuse 11 verfügt, welches einen Innenraum 12 ausbildet. Im Innenraum 12 sind Löt- bzw. Schweißkontakte 13 angeordnet, die mit im Gehäusematerial eingebetteten Funktionsbauteilen, insbesondere mit Bypassdioden, in elektrischer Verbindung stehen. Die Löt- bzw. Schweißkontakte 13 werden bei der Montage an hier nicht dargestellten solarmodulseitigen Leitern befestigt.

Ebenfalls mit den Löt- bzw. Schweißkontakten 13 in elektrischer Verbindung stehen das Gehäuseinnere 12 verlassende Anschlussleitungen 14, die die vom Solarmodul erzeugte Elektrizität abführen. An ihren freien Enden sind die Anschlussleitungen 14 mit je einem Steckverbinder 15 versehen. Die in den Figuren dargestellte zeichnerische Trennung der Anschlussleitungen 14 ist darstellungsbedingt. Tatsächlich handelt es sich bei den Anschlussleitungen 14 um einen ununterbrochenen Strang, der sich vom Gehäuseinneren 12 bis zum Steckverbinder 15 erstreckt.

Die Basis 16 der Anschlussdose 10 wird durch ihre Unterseite gebildet. Mit der Unterseite wird die Anschlussdose 10 auf dem nicht dargestellten Solarmodul angeordnet.

Das Gehäuse 11 der Anschlussdose 10 bildet seitlich des Innenraums 12 je eine Halteeinrichtung 17 für die Steckverbinder 15 aus. Von besonderer Bedeutung ist, dass jede Halteeinrichtung 17 zu dem ihr zugeordneten Steckverbinder 15 eine formkomplementäre Steckmimik ausbildet. Dies bedeutet, dass für einen Steckverbinder 15 in Form einer Steckbuchse die Halteeinrichtung 17 die Steckmimik eines komplementären Steckers ausbildet. Für einen Steckverbinder 15 in Form eines Steckers weist die Halteeinrichtung 17 eine buchsenartige Steckmimik auf.

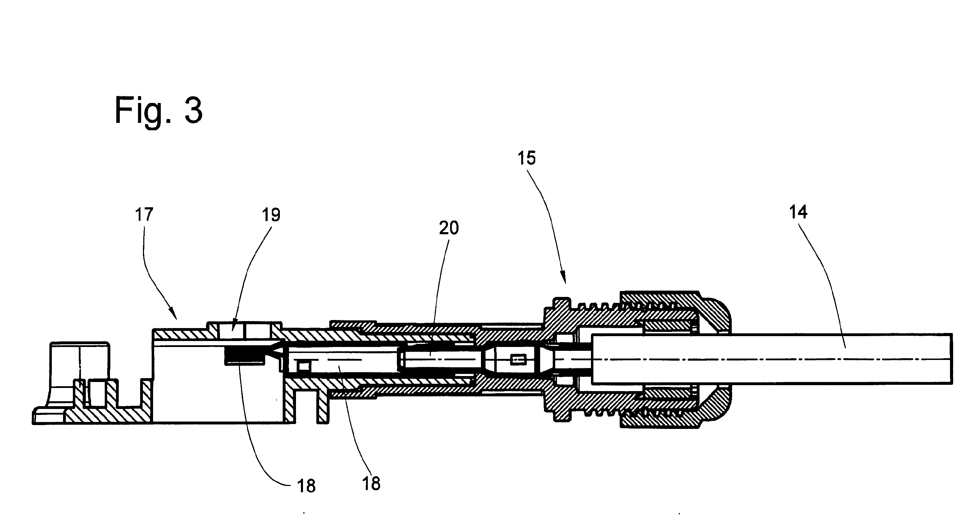

Die Halteeinrichtungen 17 verfügen zusätzlich zur zum jeweiligen Steckverbinder 15 komplementären Steckmimik jeweils einen Prüfkontakt 18 (siehe Fig. 2), der wiederum steckkomplementär zum Anschlusskontakt 20 (siehe Fig. 3) des jeweiligen Steckverbinders 15 ausgebildet ist. Über vertikal zugängliche Öffnungen 19 der Halteeinrichtungen 17 kann ein Prüfwerkzeug die Prüfkontakte 18 angreifen.

Fig. 3 ist eine Schnittdarstellung entsprechend Schnittlinie III-III in Fig. 2, wobei der in Fig. 2 dargestellte Steckverbinder in Fig. 3 auf seine zugehörige Halteeinrichtung 17 aufgesteckt ist.

Die Darstellung in Fig. 3 zeigt, wie der Anschlusskontakt 20 des Steckverbinders 15 bei auf die Halteeinrichtung 17 aufgestecktem Steckverbinder 15 den steckkomplementären Prüfkontakt 18 kontaktiert.

Die erfindungsgemäße Anschlussdose 10 bietet im Wesentlichen die folgenden Vorteile:
Zunächst wurde eine Anschlussdose 10 geschaffen, die eine neuartige Halteeinrichtung 17 für vormontierte Anschlussleitungen 14 und insbesondere deren Steckverbinder 15 bietet. Durch die Ausgestaltung der erfindungsgemäßen Halteeinrichtung 17 als zum zugehörigen Steckverbinder 15 komplementäre Steckmimik wird der Steckverbinder 15 sicher und lagegenau an der Anschlussdose positioniert. Dies ist insbesondere wichtig, um für die vollautomatische Produktion von Solarmodulen vorkonfektionierte Anschlussdosen 10 in Stapeln bzw. Magazinen bereitzustellen, die einfach von Produktionsrobotern entnommen werden können.

Einhergehend mit dem vorgenannten Vorteil wird die Montage und Funktionsprüfung der erfindungsgemäßen Anschlussdose 10 wesentlich vereinfacht. Die Halteeinrichtung 17 ist nicht nur hinsichtlich des Steckverbinders 15 steckkompatibel. Sie ist darüber hinaus mit einem Prüfkontakt versehen, der beim Ansetzen des Steckverbinders 15 an die Halteeinrichtung 17 den Anschlusskontakt 20 des Steckverbinders 15 kontaktiert.

Eine vertikal zur Basis 16 gerichtete Öffnung 19 der Halteeinrichtung 17 ermöglicht den Zugang zum Prüfkontakt 18 durch ein entsprechendes Prüfwerkzeug. Die Basis 16 ist parallel zur Montagefläche des Solarmoduls orientiert.

Bei der Montage der Anschlussdose 10 auf einem nicht dargestellten Solarmodul wird diese in Vertikalrichtung zur Basis 16 bzw. in Vertikalrichtung zur Montagefläche auf das Solarmodul aufgebracht und befestigt. Ebenfalls in Vertikalrichtung fahren Werkzeuge, die Löt- bzw. Schweißkontakte 13 an, um selbige mit solarmodulseitigen Anschlussleitungen zu konnektieren. Alternativ werden in gleicher Werkzeugbewegungsrichtung hier nicht dargestellt Kontakte mechanisch durch Klemmung mit solarmodulseitigen Leitern verbunden.

Die erfindungsgemäße Anschlussdose 10 mit ihren vertikal zugänglichen Öffnungen 19 und vertikal zugänglichen Prüfkontakten 18 ermöglicht nun erstmals gegenüber dem Stand der Technik eine rein vertikale Bewegung des Prüfwerkzeugs zur Funktionsprüfung der Anschlussdose 10. Der bisher notwendige horizontale Angriff an die nicht 100%ig lagedefinierten Anschlusskontakte der Steckverbinder 15 entfällt. Insofern ergibt sich hieraus auch ein weiterer wesentlicher Vorteil. Die Prüfkontakte sind in einer klar definierten Lage als Bestandteil der Anschlussdose 10 ausgestaltet. Im Gegensatz zu den mit einem gewissen Passungsspiel in den Halteeinrichtungen 17 des Standes der Technik gelagerten Steckverbindern 15 ergibt sich bei der erfindungsgemäßen Anschlussdose keine Lagestreuung der Prüfkontakte 18.

In einer Fertigungsstraße für Solarmodule kann folglich das Montagewerkzeug für die Anschlussdose 10 sämtliche Werkzeuge zur Montage der Dosen 10, der Löt-/Schweißkontakte 13 sowie der Funktionsprüfung in sich vereinen, so dass Montage und Funktionsprüfung zu einem Arbeitsgang zusammengefasst werden können.

Sofern es für die Montage erforderlich ist, können werkzeugseitige Zentrierstempel in anschlussdosenseitige Zentrieröffnungen 21 eingreifen. Zentrierstege 22 mit zum Zentrierstempel gerichteten Schrägflächen 23 unterstützen die Zentrierfunktion.

Diese Zentrierhilfen 21 bis 23 können einerseits dazu genutzt werden, die Anschlussdose 10 bei Aufnahme durch das Montagewerkzeug relativ zu diesem zu zentrieren. Sie können aber bei einem in mehreren Schritten und durch mehrere Werkzeuge ausgeführten Montagevorgang auch dazu dienen, die Anschlussdose 10 beim Wechsel von einem zum nächsten Montagewerkzeug auf den Solarpanelen neu zu justieren. Hierzu ist lediglich zu beachten, dass das Befestigungsmittel zwischen Anschlussdose 10 und Solarmodul, für gewöhnlich ein Klebemittel, entsprechend langsam aushärtet und während der einzelnen Montageschritte eine Neuzentrierung der Anschlussdose 10 zulässt.

### Bezugszeichenliste:

- 10: Anschlussdose
- 11: Gehäuse von 10
- 12: Innenraum
- 13: Löt-/ Schweißkontakt
- 14: Anschlussleitung
- 15: Steckverbinder
- 16: Basis
- 17: Halteeinrichtung
- 18: Prüfkontakt
- 19: Öffnung
- 20: Anschlusskontakt von 15
- 21: Zentrieröffnung
- 22: Zentriersteg
- 23: Schrägflächen

## Patentansprüche

1. Anschlussdose 10, insbesondere für ein Solarmodul, mit einer zur modulseitigen Montagefläche parallelen Basis 16 und mit einem von einem Deckel verschlossenen und von einem Gehäuse 11 gebildeten Innenraum 12, innerhalb dessen ein solarmodulseitige Leiter mit einer Anschlussleitung 14 zum Abführen erzeugter Elektrizität verbunden ist, wobei die den Innenraum verlassende Leitung 14 mit einem Steckverbinder 15 versehen ist, welcher in einer anschlussdosenseitigen Halteeinrichtung 17 angeordnet ist, **dadurch gekennzeichnet, dass** ein im Wesentlichen vertikal zur Basis 16 zugänglicher Prüfkontakt 18 vorgesehen ist, der mit einem Anschlusskontakt 20 des Steckverbinders 15 der Anschlussleitung 14 elektrisch verbunden ist und mittels dessen durch Einspeisen elektrischer Spannung die Funktion der Anschlussdose 10 prüfbar ist.

2. Anschlussdose nach Anspruch 1, **dadurch gekennzeichnet, dass** der Anschlusskontakt 20 des Steckverbinders 15 und der Prüfkontakt 18 separate Bauteile bilden.

3. Anschlussdose nach Anspruch 1 oder 2, **dadurch gekennzeichnet, dass** der Prüfkontakt 18 an dem Anschlussdosengehäuse 10 angeordnet ist.

4. Anschlussdose nach Anspruch 2, **dadurch gekennzeichnet, dass** der Prüfkontakt 18 aufgrund der Anordnung des Steckverbinders 15 an der Halteeinrichtung 17 mit dem Anschlusskontakt 20 des Steckverbinders 15 in elektrischem Kontakt steht.

5. Anschlussdose nach einem der Ansprüche 1 bis 4, **dadurch gekennzeichnet, dass** das Anschlussdosengehäuse 11 eine zum Steckverbinder 15 komplementäre und als Halteeinrichtung 17 dienende Steckmimik ausbildet, an welcher der Steckverbinder 15 angeordnet ist.

6. Anschlussdose nach Anspruch 5, **dadurch gekennzeichnet, dass** die komplementäre Steckmimik den Prüfkontakt 18 trägt, der bei angeordnetem Steckverbinder 15 mit dessen Anschlusskontakt 20 in elektrischer Verbindung steht und über eine im Wesentlichen vertikal zur Basis 16 gerichtete Öffnung 19 zugänglich ist.

7. Anschlussdose nach einem der vorhergehenden Ansprüche, **dadurch gekennzeichnet, dass** der Anschlusskontakt 20 des Steckverbinders 15 aufgrund von dessen Anordnung in der Haltevorrichtung 17 im Wesentlichen lediglich horizontal zugänglich ist.

8. Anschlussdose nach einem der vorhergehenden Ansprüche, **dadurch gekennzeichnet, dass** die Anschlussdose 10 Zentriermimiken aufweist, mittels derer sie gegenüber einem Prüfwerkzeug zentrierbar ist.

9. Anschlussdose nach Anspruch 1, **dadurch gekennzeichnet, dass** der Prüfkontakt 18 vom Anschlusskontakt 20 des Steckverbinders 15 gebildet ist, der durch eine im Wesentlichen vertikal zur Basis 16 gerichtete Öffnung im Steckverbinder 15 zugänglich ist.
